# EUROPEAN PATENT APPLICATION

(11) **EP 4 407 749 A1**
(43) Date of publication of application: **31.07.2024**
(21) Application number: 21961048.2
(22) Date of filing: 22.10.2021
(51) Int. Cl.: H01M 10/60, H01M 10/6552, H01M 10/6556, H01M 10/6557, H01M 10/656, H01M 10/659

(54) **THERMAL MANAGEMENT APPARATUS, CONTROL METHOD OF THERMAL MANAGEMENT APPARATUS, AND VEHICLE**

(71) Applicant: Huawei Technologies Co., Ltd., Shenzhen, Guangdong 518129 (CN)
(72) Inventor: SHI, Jincheng, Shenzhen, Guangdong 518129 (CN); LU, Xiunan, Shenzhen, Guangdong 518129 (CN); WU, Xudong, Shenzhen, Guangdong 518129 (CN)
(74) Representative: Körber, Martin Hans
(86) International application number: PCT/CN2021/125688
(87) International publication number: WO 2023/065300

(57) **Abstract**

This application relates to the field of vehicles, and specifically, to a heat management apparatus, a control method for the heat management apparatus, and a vehicle. The heat management apparatus includes: a first heat exchange unit, where the first heat exchange unit is provided with an energy storage material, and the first heat exchange unit is connected to a battery cell by using a heat conducting pipe; and a second heat exchange unit including a first cooling pipe internally provided with a refrigerant, where at least a part of the first cooling pipe is configured in the energy storage material. The heat management apparatus can meet heat dissipation and heating requirements of a battery in various working conditions, fully utilize energy of the battery, reduce power consumption of the battery, and reduce a safety risk caused due to an excessively high temperature of a battery cell.

## Description

### TECHNICAL FIELD

This application relates to the field of vehicles, and specifically, to a heat management apparatus, a control method for the heat management apparatus, and a vehicle.

### BACKGROUND

A battery is a power source of an electric vehicle, and has vital impact on operation of the electric vehicle. For efficient operation of a battery, there is a relatively high requirement on a temperature of the battery. When the temperature of the battery is excessively high, various side reactions (for example, electrolyte oxidation and reaction between an electrolyte and lithium) inside the battery are aggravated, and various gases (for example, CO and CO₂) are produced inside the battery. This may cause phenomena such as spontaneous combustion and explosion of the battery. When the temperature of the battery is excessively low, a resistance of the electrolyte increases, and a chemical reaction rate inside the battery is reduced. As a result, a battery capacity is reduced, and power supply performance is deteriorated, affecting normal operation of a vehicle.

To keep a battery in an optimal temperature range for efficient operation, currently, a method is to arrange a liquid pipeline in the battery. The battery is heated and cooled by circulating liquid in the liquid pipeline. However, because a structure of the liquid pipeline is complex, a bending part of the liquid pipeline causes a pressure loss of liquid, and reduces a flow rate of the liquid, thereby reducing heat exchange efficiency. A relatively large temperature difference is formed between a liquid inlet and a liquid outlet of the liquid pipeline. Therefore, temperatures in different areas inside the battery are different, resulting in unbalanced chemical reactions inside the battery. In addition, energy of the battery also needs to be consumed to drive circulation of the liquid. Another method is to arrange a phase-change material in the battery. When a temperature of the battery is relatively high, the phase-change material absorbs and stores energy of the battery. When the temperature of the battery is relatively low, the energy stored in the phase-change material is used to heat the battery. However, due to limited energy storage of the phase-change material, requirements for long-time cooling and heating of the battery cannot be met.

Therefore, it is a great challenge in the industry to keep a battery in an optimal temperature range that can be used for efficient operation, and reduce energy consumption of the battery.

### SUMMARY

In view of the foregoing problem, embodiments of this application provide a heat management apparatus, a control method for the heat management apparatus, and a vehicle, to meet heat dissipation and heating requirements of a battery in various working conditions, fully utilize energy of the battery, reduce power consumption of the battery, and reduce a safety risk caused due to an excessively high temperature of the battery.

According to a first aspect of the embodiments of this application, a heat management apparatus is provided, including: a first heat exchange unit, where the first heat exchange unit is provided with an energy storage material, and the first heat exchange unit is connected to a battery cell by using a heat conducting pipe; and a second heat exchange unit, where the second heat exchange unit includes a first cooling pipe internally provided with a refrigerant, and at least a part of the first cooling pipe is configured in the energy storage material.

According to the foregoing configuration, the energy storage material is used to store and release heat of the battery cell, heat dissipated by the battery cell is fully utilized, and a temperature of the battery cell can be adjusted without consuming extra energy. This adapts to scenarios of fast charging in a short time and short-distance traveling (for example, going to work and getting off work), and reduces consumption of a power battery. The second heat exchange unit can implement heat exchange on the energy storage material. When heat in the energy storage material reaches an upper limit and after heat in the energy storage material is completely dissipated, heat exchange can be performed on the energy storage material by using the second heat exchange unit. This adapts to a scenario in which a vehicle travels for a long distance and an extreme temperature scenario. The first heat exchange unit is connected to the battery cell by using the heat conducting pipe, so that direct heat conduction between the battery cell and the first heat exchange unit can be avoided, thereby improving a heat conduction effect.

In a possible implementation, the first cooling pipe is in a straight-line shape.

In a possible implementation, the first cooling pipe may accommodate a refrigerant or cooling liquid. The refrigerant may include, for example, freon, alkane, ammonia gas, and carbon dioxide. The cooling liquid may include, for example, water and acetone.

The foregoing configuration can facilitate fast flow of the refrigerant or the cooling liquid, and prevent a bent cooling pipe from increasing flow resistance of the refrigerant or the cooling liquid, thereby improving heat exchange efficiency of the energy storage material.

In a possible implementation, the heat conducting pipe includes a first heat pipe, one end of the first heat pipe is configured to be in contact with the battery cell, and the other end of the first heat pipe is configured in the energy storage material.

According to the foregoing configuration, the first heat pipe can be used to quickly transfer heat of the battery cell to a phase-change energy storage material, thereby reducing a safety risk caused due to an excessively high local temperature of the battery cell. The first heat pipe can reduce a temperature difference between battery cells to balance temperatures between the battery cells, thereby improving use performance of a power battery.

In a possible implementation, the first heat pipe includes one or more of the following: a flat-plate heat pipe and a curved heat pipe.

According to the foregoing configuration, heat pipes in different shapes can adapt to battery cells in different shapes, and are applicable to various types of batteries.

In a possible implementation, the energy storage material is a phase-change energy storage material.

In a possible implementation, the phase-change energy storage material is mixed with expanded graphite particles and/or foamed metal.

The expanded graphite particles and the foamed metal are added to the phase-change energy storage material, so that heat conduction efficiency of the phase-change energy storage material can be improved.

In a possible implementation, the apparatus further includes a control apparatus, configured to: when a temperature of the energy storage material is higher than a first temperature threshold, control the second heat exchange unit to cool the energy storage material.

According to the foregoing configuration, the energy storage material is cooled only when the temperature of the energy storage material is higher than the first temperature threshold. This reduces cooling power consumption of a power battery and increases an endurance mileage of the power battery.

In a possible implementation, when the temperature of the energy storage material is lower than a second temperature threshold, the control apparatus controls the second heat exchange unit to heat the energy storage material.

According to the foregoing configuration, the energy storage material is heated only when the temperature of the energy storage material is lower than the second temperature threshold. This reduces heating power consumption of the power battery and increases the endurance mileage of the power battery.

In a possible implementation, when the temperature of the energy storage material is higher than the second temperature threshold and lower than the first temperature threshold, the control apparatus controls the second heat exchange unit to stop cooling the energy storage material.

According to the foregoing configuration, when the temperature of the energy storage material is lower than the first temperature threshold and higher than the second temperature threshold, the second heat exchange unit stops cooling the energy storage material. This reduces power consumption of the power battery and increases the endurance mileage of the power battery.

According to a second aspect of the embodiments of this application, a control method for a heat management apparatus is provided, including: obtaining a temperature of an energy storage material in first heat exchange unit, where the first heat exchange unit is provided with the energy storage material, and the first heat exchange unit is connected to a battery cell by using a heat conducting pipe; and when the temperature of the energy storage material is higher than a first temperature threshold, controlling a second heat exchange unit to cool the energy storage material, where the second heat exchange unit includes a first cooling pipe internally provided with a refrigerant, and at least a part of the first cooling pipe is configured in the energy storage material.

According to the foregoing configuration, the energy storage material is used to store and release heat of the battery cell, heat dissipated by the battery cell is fully utilized, and no extra energy needs to be consumed. This reduces power consumption of a power battery, and adapts to scenarios of fast charging in a short time and short-distance traveling (for example, going to work and getting off work). When the temperature of the energy storage material is higher than the first temperature threshold, the second heat exchange unit is controlled to cool the energy storage material, to adapt to a long-time scenario and a high-temperature scenario.

In a possible implementation, the method further includes: when the temperature of the energy storage material is lower than a second temperature threshold, controlling the second heat exchange unit to heat the energy storage material.

In a possible implementation, the method further includes: when the temperature of the energy storage material is higher than the second temperature threshold and lower than the first temperature threshold, controlling the second heat exchange unit to stop cooling the energy storage material.

According to a third aspect of the embodiments of this application, a control apparatus for a heat management apparatus is provided, including:
an obtaining module, configured to obtain a temperature of an energy storage material in a first heat exchange unit, where the first heat exchange unit is provided with the energy storage material, and the first heat exchange unit is connected to a battery cell by using a heat conducting pipe; and a control module, configured to: when the temperature of the energy storage material is higher than a first temperature threshold, control a second heat exchange unit to cool the energy storage material, where the second heat exchange unit includes a first cooling pipe internally provided with a refrigerant, and at least a part of the first cooling pipe is configured in the energy storage material.

In a possible implementation, the control module is further configured to: when the temperature of the energy storage material is lower than a second temperature threshold, control the second heat exchange unit to heat the energy storage material.

In a possible implementation, the control module is further configured to: when the temperature of the energy storage material is higher than the second temperature threshold and lower than the first temperature threshold, control the second heat exchange unit to stop cooling the energy storage material.

According to a fourth aspect of the embodiments of this application, a vehicle is provided, including the heat management apparatus provided in any one of the first aspect of the embodiments of this application and the possible implementations of the first aspect, the control apparatus for a heat management apparatus provided in any one of the third aspect of the embodiments of this application and the possible implementations of the third aspect, and a battery pack.

In a possible implementation, the battery pack includes: a compartment; and a battery module, accommodated in the compartment and including one or more battery cells, where the first heat exchange unit is accommodated in the compartment.

According to the foregoing aspects provided in the embodiments of this application, heat management is performed on the battery cell by using heat dissipated by the battery cell, and a temperature of the battery cell can be adjusted without consuming extra energy. In this way, heat dissipation and insulation of a power battery without power consumption in a short-time working condition (scenarios of fast charging in a short time and short-distance traveling (for example, going to work and getting off work)) are met, and consumption of the power battery is reduced. When heat in the energy storage material reaches an upper limit and after heat in the energy storage material is completely dissipated, heat exchange can be performed on the energy storage material by using the second heat exchange unit. This adapts to a scenario in which a vehicle travels for a long distance and an extreme temperature scenario.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, content referred to by same reference numerals is also the same. The specific accompanying drawings are described as follows:
FIG. 1 is a schematic diagram of a partial structure of a heat management apparatus installed in a power battery according to an embodiment of this application;
FIG. 2 is a schematic cross-sectional diagram of a partial structure of a heat management apparatus installed in a power battery according to an embodiment of this application;
FIG. 3 is a schematic diagram of a partial structure of a heat management apparatus installed in a power battery according to another embodiment of this application;
FIG. 4 is a schematic diagram of a structure of a heat management apparatus installed in a power battery according to an embodiment of this application;
FIG. 5 is a schematic diagram of a temperature change with time of a battery cell that uses a heat management apparatus provided in this application;
FIG. 6 is a flowchart of a control method for a heat management apparatus according to an embodiment of this application;
FIG. 7 is a schematic diagram of modules of a control apparatus for a heat management apparatus according to an embodiment of this application; and
FIG. 8 is a schematic diagram of a computing device according to an embodiment of this application.

### DESCRIPTION OF EMBODIMENTS

A heat management apparatus provided in an embodiment of this application may be applied to a power battery of an electric vehicle, a storage battery of a hybrid electric vehicle, and a battery of another transportation means. The heat management apparatus can meet heat dissipation and heating requirements of a battery in different scenarios, and save energy of the battery.

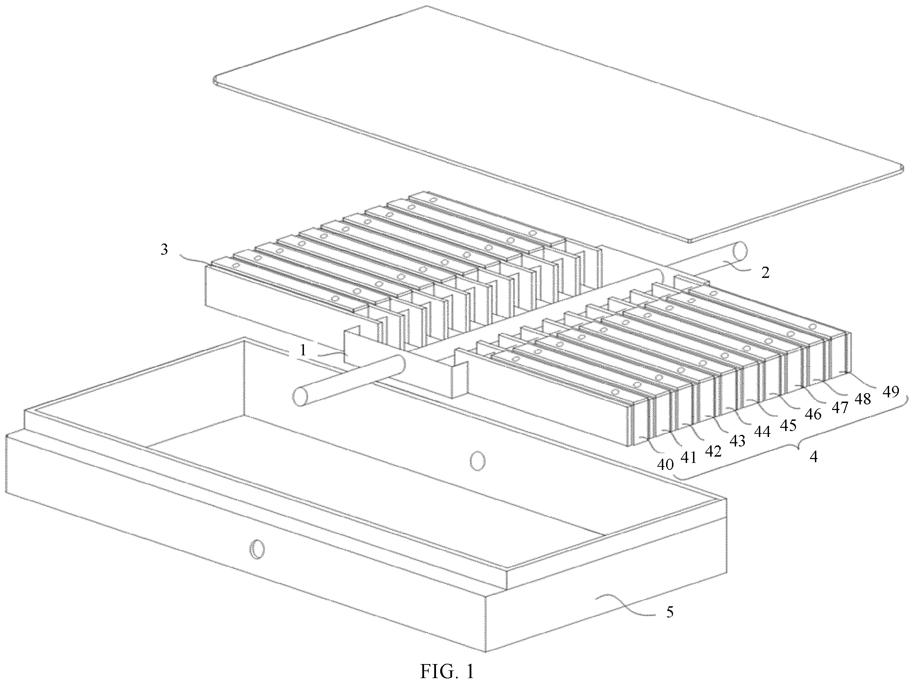

FIG. 1 shows a partial structure of a heat management apparatus installed in a power battery according to an embodiment of this application. As shown in FIG. 1, the power battery may include a compartment 5 and a plurality of battery cells 40 to 49 located in the compartment 5. In an example shown in FIG. 1, each of the battery cells 40 to 49 is a cuboid, the 10 battery cells 40 to 49 are arranged together to form one battery module 4, and there is a specific spacing between two adjacent battery modules 4. The structure of the power battery shown in FIG. 1 is merely an example. The battery cells 40 to 49 may be in other shapes, for example, a cylindrical shape, and a plurality of battery cells may form one battery module 4 in any form. The compartment may accommodate one or more battery modules. This is not limited in this application.

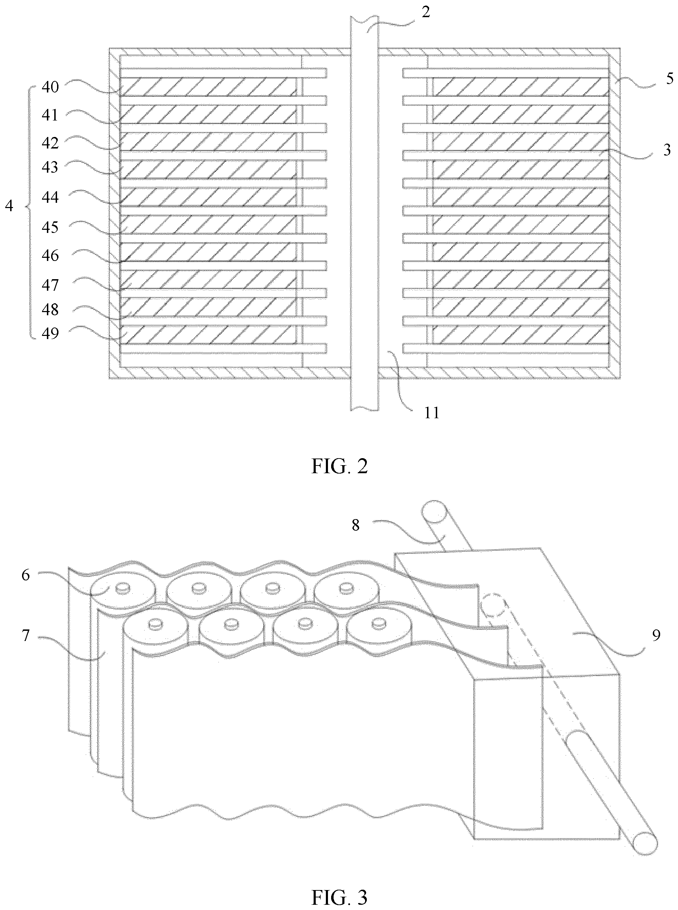

As shown in FIG. 1 and FIG. 2, the heat management apparatus may include a first heat exchange unit 1, a second heat exchange unit 2, and a heat conducting pipe 3. The first heat exchange unit 1 is provided with an energy storage material 11, and the first heat exchange unit 11 is connected to the battery cells 40 to 49 by using the heat conducting pipe 3. The second heat exchange unit includes a first cooling pipe 21 internally provided with a refrigerant, and at least a part of the first cooling pipe 21 is configured in the energy storage material.

As shown in FIG. 1 and FIG. 2, the first heat exchange unit 1 is located between two adjacent battery modules 4, the first heat exchange unit 1 is provided with a box, and the energy storage material 11 is accommodated in the box. The energy storage material 11 is configured to store and release heat of the battery cells 40 to 49. The first cooling pipe 21 in the second heat exchange unit 2 is configured to perform heat exchange with the energy storage material 11, the first cooling pipe 21 may be in a straight-line shape, and at least a part of the first cooling pipe 21 is configured in the energy storage material 11. The heat conducting pipe 3 is configured to perform heat conduction between the battery cells 40 to 49 and the first heat exchange unit 1. The heat conducting pipe 3 may include a plurality of heat pipes. One end of each heat pipe is located between two adjacent battery cells in the battery cells 40 to 49, and the ends are used for heat exchange with the battery cells 40 to 49. The other end of each heat pipe is disposed in the energy storage material 11, and is used for heat exchange with the energy storage material 11.

A heat pipe is a heat conduction apparatus that quickly transfers heat of a heat-generating object to the outside of a heat source by using a heat conduction principle and a heat transfer property of a phase-change medium. The heat pipe usually includes a pipe shell, a wick, and an end cap. The pipe shell may be made of copper, the pipe shell is provided with an inner cavity, and pressure in the inner cavity of the pipe shell is 1.3×10⁻¹ pa to 10⁻⁴ pa. A cavity wall of the inner cavity is provided with a porous capillary material. The inner cavity is filled with working liquid, and the working liquid may be acetone or water. The working liquid is absorbed in the capillary material, and the inner cavity is sealed by the end cap. One end of the heat pipe is an evaporation section (heating section), and the other end of the heat pipe is a condensation section (cooling section). When one end of the heat pipe is heated, the working liquid in the capillary material evaporates into steam, and the steam flows to the other end of the heat pipe under a small pressure difference to release heat and is condensed into liquid. The liquid flows back to the heated end along the porous capillary material under an action of capillary force. As a result, a heat transfer effect is achieved through such circulation.

The heat pipe may include, for example, a flat-plate heat pipe and a curved heat pipe. In the examples shown in FIG. 1 and FIG. 2, the heat pipe is a flat-plate heat pipe, and is located between two adjacent battery cells, and extends outwards relative to the battery module 4. An extending part thereof is located in the energy storage material 11 in the first heat exchange unit 1. Apart that is of the heat pipe and that is located between the two adjacent battery cells may perform heat exchange with the battery cells by using thermally conductive silicone, and transfer heat of the battery cells to the part that is of the heat pipe and that is located in the energy storage material 11, to transfer the heat of the battery cells to the energy storage material 11. The flat-plate heat pipe can reduce a temperature difference between different positions on a battery cell, thereby improving temperature uniformity of the battery cell. One end of the flat-plate heat pipe is located between two adjacent battery cells, and the other end of the flat-plate heat pipe extends outwards relative to the battery module 4, so that heat generated by the battery cells 40 to 49 is exported to the outside of the battery module 4. This reduces a risk of spontaneous combustion and explosion that occur due to excessively high local temperatures of the battery cells 40 to 49.

In another embodiment, there is an alternative of the heat pipe, in other words, the heat conducting pipe 3 may alternatively include a plurality of metal or non-metal heat conducting elements or the like.

In this embodiment, the energy storage material 11 in the first heat exchange unit 1 may include a phase-change energy storage material. The phase-change energy storage material is a heat storage unit that can absorb and store heat and that can release, in a specific condition, the heat stored in the heat storage unit. The phase-change energy storage material may include, for example, a material such as an inorganic salt, paraffin, or crystalline polymer. In the examples shown in FIG. 1 and FIG. 2, the phase-change energy storage material is a solid-liquid phase-change energy storage material, and can be converted from solid to liquid when the material absorbs heat to reach a specific temperature. The phase-change energy storage material is packaged in an energy storage housing to avoid leakage. The energy storage housing may be made of a heat insulation material, so that the phase-change energy storage material is thermally isolated from a battery cell.

The phase-change energy storage material may be mixed with expanded graphite particles and/or foamed metal. In this way, heat conduction efficiency of the phase-change energy storage material is improved to quickly absorb heat of a battery cell and release heat in the phase-change energy storage material. It should be noted that no limitation is set to the foregoing materials in this application. The phase-change energy storage material may be mixed with another material based on an actual requirement.

When a temperature of a battery cell is increased, heat generated by the battery cell can be conducted to the phase-change energy storage material by using a heat pipe, and the phase-change energy storage material absorbs and stores the heat dissipated by the battery cell, thereby implementing heat dissipation of the battery cell. When absorbing specific heat and reaching a melting temperature, the phase-change energy storage material is converted to a liquid state from a solid state. When the temperature of the battery cell is decreased, the heat stored in the phase-change energy storage material is conducted to the battery cell by using a flat-plate heat pipe, to heat the battery cell.

FIG. 3 shows a structure of a heat management apparatus installed in a power battery according to another embodiment of this application. Different from the embodiments shown in FIG. 1 and FIG. 2, battery cells 6 of the power battery shown in FIG. 3 are cylindrical, and every four battery cells 6 are arranged in one row. Two rows are drawn in the figure as an example. A structure of the power battery shown in FIG. 3 is merely an example, and the battery cells 6 may be arranged in any form. This is not limited in this application.

Similar to the heat management apparatus shown in FIG. 1 and FIG. 2, the heat management apparatus shown in FIG. 3 may include a first heat exchange unit 9, a second heat exchange unit 8, and a heat conducting pipe 7. The first heat exchange unit 9 and the second heat exchange unit 8 are the same as those in the foregoing embodiment. For brevity, details are not described herein again.

In the example shown in FIG. 3, a heat pipe of the heat conducting pipe 7 is a curved heat pipe. The heat pipe surrounds side surfaces of cylindrical battery cells 6 based on an arrangement manner of the battery cells 6. In the example shown in FIG. 3, the curved heat pipe is located between two adjacent rows of battery cells, and extends outwards relative to each row of battery cells. An extending part thereof is located in an energy storage material in the first heat exchange unit 9, and a part that is of the heat pipe and that is located between the two adjacent rows of battery cells performs heat exchange with the battery cells by using thermally conductive silicone, and transfers heat of the battery cells 6 to the part that is of the heat pipe and that is located in the energy storage material, to transfer the heat of the battery cells 6 to the energy storage material. It should be noted that the curved heat pipe may alternatively surround the battery cells in any other form. This is not limited in this application.

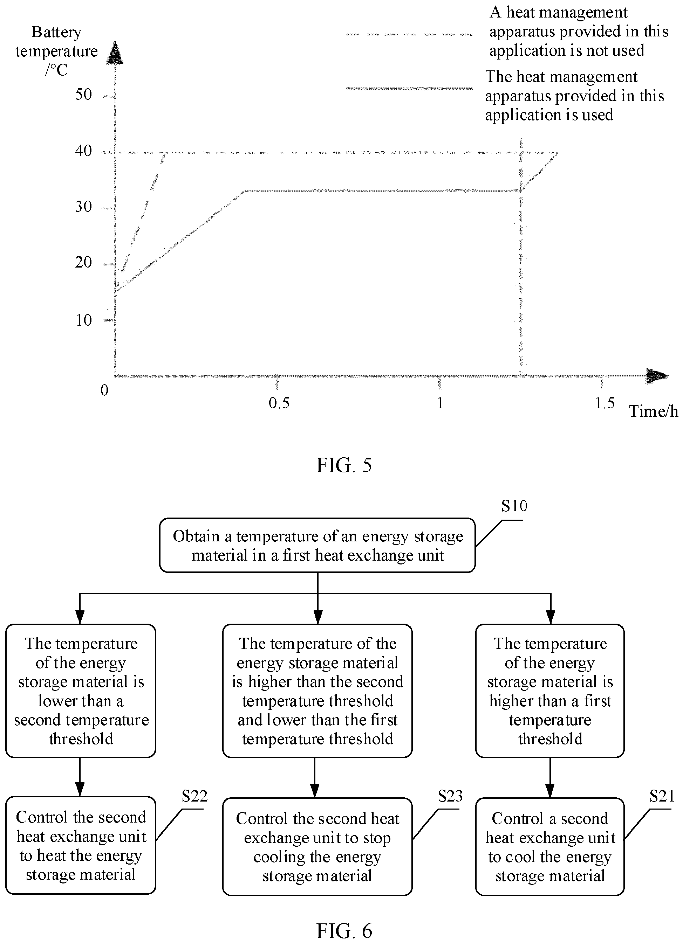

FIG. 5 is a schematic diagram of a temperature change with time of a battery cell that uses the heat management apparatus provided in the embodiments shown in FIG. 1 to FIG. 3. It can be learned from FIG. 5 that the phase-change energy storage material can reduce a temperature rise speed of the battery cell, and keep a battery at a constant temperature within a period of time. The foregoing heat dissipation and heating performed on a battery cell by using the energy storage material are applicable to scenarios of fast charging in a short time and short-distance (or short-time) traveling (for example, going to work and getting off work) of a power battery in a vehicle, without consuming extra energy, and power consumption of the power battery is reduced.

However, when the vehicle travels for a long time (or a long distance) or the power battery runs for a long time, because energy stored in the energy storage material is limited, a requirement for long-time heat dissipation or heating of the power battery cannot be met. To continue to ensure that the temperature of the battery cell is not further increased or decreased, heat exchange may be performed on the energy storage material by using the second heat exchange unit based on a temperature of the energy storage material, a user requirement, an ambient temperature, the temperature of the battery cell, and the like.

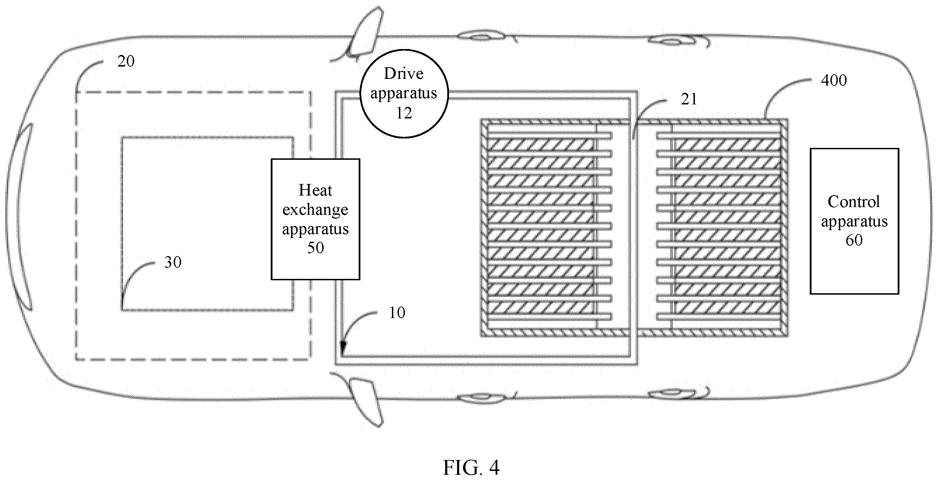

In some embodiments, as shown in FIG. 4, the second heat exchange units 2 and 8 each may include a cooling loop 10, a heating loop 30, a refrigerating loop 20, and a heat exchange apparatus 50.

The cooling loop 10 may include a drive apparatus 12 and a first cooling pipe 21. The first cooling pipe 21 may be partially inserted into an energy storage material in a battery pack 400 and connected to the drive apparatus 12, so that the first cooling pipe 21 and the drive apparatus 12 form a loop. The first cooling pipe 21 in the cooling loop 10 may be filled with cooling liquid, and the cooling liquid may be one or more of the following: water and acetone. This is not limited in this application. The drive apparatus 12 can drive the cooling liquid to be circulated in the loop. The heating loop 30 may be configured to heat the cooling loop 10 by using the heat exchange apparatus 50, and the refrigerating loop 20 may be configured to refrigerate the cooling loop 10 by using the heat exchange apparatus 50, to heat and cool the energy storage material. Optionally, the second heat exchange unit may include only the heating loop and the cooling loop. Correspondingly, the first cooling pipe 21 may be connected to the heating loop and the cooling loop to heat and cool the energy storage material by starting different loops.

In some embodiments, as shown in FIG. 4, the heat management apparatus further includes a control apparatus 60. The control apparatus 60 may be, for example, a vehicle-mounted controller. The control apparatus may control heating or cooling power of the second heat exchange unit based on different usage scenarios and different energy storage materials, to adjust a temperature of the energy storage material.

In some embodiments, when the temperature of the energy storage material is higher than a first temperature threshold, the control apparatus may control the cooling loop 10, the refrigerating loop 20, and the heat exchange apparatus 50 to be started, the cooling liquid in the cooling loop 10 transfers heat in the energy storage material when passing through the first cooling pipe, and the refrigerating loop 20 transfers the heat in the energy storage material by using the heat exchange apparatus 50, thereby reducing a temperature of a battery cell. The first temperature threshold may be set based on different energy storage materials. For example, the first temperature threshold may be a value between 30°C and 60°C. The temperature of the energy storage material may be obtained by using a temperature sensor disposed in the energy storage material.

In some embodiments, when the temperature of the energy storage material is lower than a second temperature threshold, the second temperature threshold may be, for example, a value between -15°C and 0°C. The control apparatus may control the cooling loop 10, the heating loop 30, and the heat exchange apparatus 50 to be started. Heat of the heating loop 30 is transferred to the cooling loop 10 by using the heat exchange apparatus 50. When the cooling liquid in the cooling loop 10 flows through the first cooling pipe, heat is transferred to the energy storage material to heat the energy storage material to increase the temperature of the energy storage material, thereby increasing a temperature of a battery cell. The second temperature threshold is lower than the first temperature threshold.

In some embodiments, when the temperature of the energy storage material is higher than the second temperature threshold and lower than the first temperature threshold, the control apparatus may control the cooling loop 10 in the second heat exchange unit to stop cooling the energy storage material. For example, the drive apparatus 12 in the cooling loop 10 may be controlled to stop running, to reduce power consumption.

In a variant example, when the temperature of the energy storage material is higher than the second temperature threshold and lower than the first temperature threshold, when an ambient temperature is, for example, higher than 30°C (a third temperature threshold), the cooling loop 10 and the refrigerating loop 20 are controlled to work to cool the energy storage material. Because there is a relatively low probability that heat insulation needs to be performed on a battery cell when the ambient temperature is relatively high, heat dissipation of the energy storage material may be started as early as possible, to suppress occurrence of a case in which a temperature of the battery cell is excessively high.

In a further variant example, control may be further performed based on a navigation distance. The navigation distance is a distance from a navigation start point to a navigation end point, and may be obtained by using a vehicle-mounted navigation apparatus, a mobile phone connected to a vehicle, or the like. Specifically, when the temperature of the energy storage material is higher than the second temperature threshold and lower than the first temperature threshold, when the ambient temperature is, for example, higher than 0°C and the navigation distance is greater than a first distance threshold, the cooling loop 10 and the cooling loop 20 are controlled to work to cool the energy storage material. A long navigation distance means that more electric energy is required to drive a vehicle to travel and more heat is generated by a battery cell. Therefore, in this case, heat dissipation of the energy storage material may be started as early as possible through the foregoing control, to suppress occurrence of a case in which a temperature of the battery cell is excessively high.

FIG. 6 is a flowchart of a control method for a heat management apparatus according to an embodiment of this application. The control method for the heat management apparatus provided in this embodiment of this application may be performed by a terminal, for example, a vehicle, or may be performed by an electronic apparatus applied to a terminal, for example, a system chip or a universal chip.

As shown in FIG. 6, the control method for the heat management apparatus provided in this embodiment of this application includes the following steps.

S10: Obtain a temperature of an energy storage material in a first heat exchange unit.

The energy storage material is configured to store and release heat of a battery cell. The first heat exchange unit is provided with the energy storage material, and the first heat exchange unit is connected to the battery cell by using a heat conducting pipe. For descriptions of the energy storage material and the first heat exchange unit, refer to the foregoing embodiments. For brevity, details are not described herein again.

Step S21: When a temperature of the energy storage material is higher than a first temperature threshold, control a second heat exchange unit to cool the energy storage material.

The second heat exchange unit is configured to perform heat exchange with the energy storage material, the second heat exchange unit includes a first cooling pipe internally provided with a refrigerant, and at least a part of the first cooling pipe is configured in the energy storage material. For a description of the second heat exchange unit, refer to the foregoing embodiments of this application. For brevity, details are not described herein again.

In some embodiments, the method further includes step S22: When the temperature of the energy storage material is lower than a second temperature threshold, control the second heat exchange unit to heat the energy storage material.

In some embodiments, the method further includes step S23: When the temperature of the energy storage material is higher than the second temperature threshold and lower than the first temperature threshold, control the second heat exchange unit to stop cooling the energy storage material.

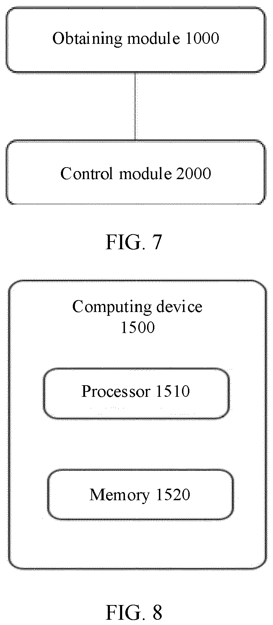

FIG. 7 is a schematic diagram of modules of a control apparatus for a heat management apparatus according to an embodiment of this application. As shown in FIG. 7, the control apparatus for a heat management apparatus provided in this embodiment of this application may include an obtaining module 1000 and a control module 2000.

The obtaining module 1000 is configured to obtain a temperature of an energy storage material in a first heat exchange unit, where the first heat exchange unit is provided with the energy storage material, the first heat exchange unit is connected to a battery cell by using a heat conducting pipe, and the energy storage material is configured to store and release heat of the battery cell. The control module 2000 is configured to: when a temperature of the energy storage material is higher than a first temperature threshold, control a second heat exchange unit to cool the energy storage material, where the second heat exchange unit is configured to perform heat exchange with the energy storage material, the second heat exchange unit includes a first cooling pipe internally provided with a refrigerant, and at least a part of the first cooling pipe is configured in the energy storage material.

In some embodiments, the control module 2000 is further configured to: when the temperature of the energy storage material is lower than a second temperature threshold, control the second heat exchange unit to heat the energy storage material.

In some embodiments, the control module 2000 is further configured to: when the temperature of the energy storage material is higher than the second temperature threshold and lower than the first temperature threshold, control the second heat exchange unit to stop cooling the energy storage material.

It should be noted that the foregoing modules, that is, the obtaining module 1000 and the control module 2000, are configured to perform related steps of the foregoing method. For example, the obtaining module 1000 is configured to perform related content of step S10, and the control module 2000 is configured to perform related content of step S21 to step S23 and the like.

In this embodiment, the control apparatus is presented in a form of a module. The "module" herein may include an application-specific integrated circuit (application specific integrated circuit, ASIC), a processor that executes one or more software or firmware programs and a memory, an integrated logic circuit, and/or another component that can provide the foregoing functions. In addition, the obtaining module 1000 and the control module 2000 may be implemented by using a computing device shown in FIG. 8.

FIG. 8 is a schematic diagram of a structure of a computing device 1500 according to an embodiment of this application. The computing device 1500 includes a processor 1510 and a memory 1520.

The processor 1510 may be connected to the memory 1520. The memory 1520 may be configured to store program code and data. Therefore, the memory 1520 may be a storage unit in the processor 1510, an external storage unit independent of the processor 1510, or a component including a storage unit in the processor 1510 and an external storage unit independent of the processor 1510.

Optionally, the computing device 1500 may further include a bus. The memory 1520 and a communication interface may be connected to the processor 1510 by using the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that in this embodiment of this application, the processor 1510 may be a central processing unit (central processing unit, CPU). Alternatively, the processor may be another general-purpose processor, a digital signal processor (digital signal processor, DSP), an ASIC, a field programmable gate array (field programmable gate Array, FPGA) or another programmable logic device, a discrete gate or transistor logic device, a discrete hardware component, or the like. The general-purpose processor may be a microprocessor, or the processor may be any conventional processor or the like. Alternatively, the processor 1510 uses one or more integrated circuits to execute a related program, to implement the technical solutions provided in embodiments of this application.

The memory 1520 may include a read-only memory and a random access memory, and provide instructions and data for the processor 1510. A part of the processor 1510 may further include a non-volatile random access memory. For example, the processor 1510 may further store information about a device type.

When the computing device 1500 runs, the processor 1510 executes computer executable instructions in the memory 1520 to perform the operation steps of the foregoing method.

It should be understood that the computing device 1500 according to this embodiment of this application may correspond to a corresponding execution body of methods according to embodiments of this application, and the foregoing and other operations and/or functions of modules in the computing device 1500 are intended to implement corresponding procedures of the methods in the embodiments. For simplicity, details are not described herein again.

A person of ordinary skill in the art may be aware that, the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiment. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. All or some of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the program is executed by a processor, the control method for the heat management apparatus is performed. The method includes at least one of the solutions described in the foregoing embodiments.

The computer storage medium in this embodiment of this application may be any combination of one or more computer-readable media. The computer-readable medium may be a computer-readable signal medium or a computer-readable storage medium. The computer-readable storage medium may be, for example, but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this document, the computer-readable storage medium may be any tangible medium including or storing a program, and the program may be used by an instruction execution system, apparatus, or device, or be used in combination with an instruction execution system, apparatus, or device.

The computer-readable signal medium may include a data signal propagated in a baseband or propagated as a part of a carrier, where the data signal carries computer-readable program code. Such a propagated data signal may be in various forms, including but not limited to an electromagnetic signal, an optical signal, or any suitable combination thereof. The computer-readable signal medium may alternatively be any computer-readable medium other than the computer-readable storage medium. The computer-readable medium may be configured to send, propagate, or transmit a program used by an instruction execution system, apparatus, or device, or used in combination with an instruction execution system, apparatus, or device.

The program code included in the computer-readable medium may be transmitted by using any suitable medium, including but not limited to a wireless manner, a wire, an optical cable, radio frequency (radio frequency, RF), and the like, or any suitable combination thereof.

Computer program code for performing the operations in this application may be written in one or more programming languages or a combination thereof. The programming languages include an object-oriented programming language, such as Java, Smalltalk, and C++, and also include a conventional procedural programming language, such as a "C" language or a similar programming language. The program code may be entirely executed on a user computer, or some may be executed on a user computer as a separate software package, or some may be executed on a user computer while some is executed on a remote computer, or the program code may be entirely executed on a remote computer or a server. When a remote computer is involved, the remote computer may be connected to a user computer through any type of network, including a local area network (LAN) or a wide area network (WAN), or may be connected to an external computer (for example, connected by using an Internet service provider through the Internet).

An embodiment of this application further provides a vehicle, including the heat management apparatus provided in embodiments of this application, the control apparatus for a heat management apparatus provided in the embodiments of this application, and a battery pack.

In some embodiments, a battery includes a compartment; and a battery module, accommodated in the compartment and including one or more battery cells, where the first heat exchange unit is accommodated in the compartment.

For related descriptions of the heat management apparatus, the control apparatus for the heat management apparatus, and the battery, refer to the foregoing embodiments of this application. For brevity, details are not described herein again.

In this specification and claims, terms such as "first" and "second" are merely used to distinguish between similar objects, and do not represent a specific order of the objects. It may be understood that specific orders or sequences may be exchanged if permitted, so that the embodiments of this application described herein can be implemented in an order other than the order illustrated or described herein.

The term "include" used in this specification and claims should not be construed as being limited to the content listed below, and does not exclude other elements or steps. Therefore, it should be construed as specifying existence of a mentioned feature, whole, step, or component, but does not preclude existence or addition of one or more other features, wholes, steps, or components and groups thereof. Therefore, the expression "a device including an apparatus A and an apparatus B" should not be limited to a device including only the components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate one embodiment, but may indicate one embodiment. Further, in one or more embodiments, the particular features, structures, or properties can be combined in any proper manner, as will be clear from this disclosure to a person of ordinary skill in the art.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A heat management apparatus, comprising:
a first heat exchange unit, wherein the first heat exchange unit is provided with an energy storage material, and the first heat exchange unit is connected to a battery cell by using a heat conducting pipe; and
a second heat exchange unit, wherein the second heat exchange unit comprises a first cooling pipe internally provided with a refrigerant, and at least a part of the first cooling pipe is configured in the energy storage material.

2. The apparatus according to claim 1, wherein the first cooling pipe is in a straight-line shape.

3. The apparatus according to claim 1, wherein the heat conducting pipe comprises a first heat pipe, one end of the first heat pipe is in contact with the battery cell, and the other end of the first heat pipe is configured in the energy storage material.

4. The apparatus according to claim 3, wherein the first heat pipe comprises one or more of the following: a flat-plate heat pipe and a curved heat pipe.

5. The apparatus according to any one of claims 1 to 4, wherein the energy storage material is a phase-change energy storage material.

6. The apparatus according to claim 5, wherein the phase-change energy storage material is mixed with expanded graphite particles and/or foamed metal.

7. The apparatus according to any one of claims 1 to 6, further comprising a control apparatus, configured to: when a temperature of the energy storage material is higher than a first temperature threshold, control the second heat exchange unit to cool the energy storage material.

8. The apparatus according to claim 7, wherein when the temperature of the energy storage material is lower than a second temperature threshold, the control apparatus controls the second heat exchange unit to heat the energy storage material.

9. The apparatus according to claim 8, wherein when the temperature of the energy storage material is higher than the second temperature threshold and lower than the first temperature threshold, the control apparatus controls the second heat exchange unit to stop cooling the energy storage material.

10. A control method for a heat management apparatus, comprising:
obtaining a temperature of an energy storage material in a first heat exchange unit, wherein the first heat exchange unit is provided with the energy storage material, and the first heat exchange unit is connected to a battery cell by using a heat conducting pipe; and
when the temperature of the energy storage material is higher than a first temperature threshold, controlling a second heat exchange unit to cool the energy storage material, wherein the second heat exchange unit comprises a first cooling pipe internally provided with a refrigerant, and at least a part of the first cooling pipe is configured in the energy storage material.

11. The method according to claim 10, further comprising: when the temperature of the energy storage material is lower than a second temperature threshold, controlling the second heat exchange unit to heat the energy storage material.

12. The method according to claim 11, further comprising: when the temperature of the energy storage material is higher than the second temperature threshold and lower than the first temperature threshold, controlling the second heat exchange unit to stop cooling the energy storage material.

13. A control apparatus for a heat management apparatus, comprising:
an obtaining module, configured to obtain a temperature of an energy storage material in a first heat exchange unit, wherein the first heat exchange unit is provided with the energy storage material, and the first heat exchange unit is connected to a battery cell by using a heat conducting pipe; and
a control module, configured to: when the temperature of the energy storage material is higher than a first temperature threshold, control a second heat exchange unit to cool the energy storage material, wherein the second heat exchange unit comprises a first cooling pipe internally provided with a refrigerant, and at least a part of the first cooling pipe is configured in the energy storage material.

14. The apparatus according to claim 13, wherein the control module is further configured to: when the temperature of the energy storage material is lower than a second temperature threshold, control the second heat exchange unit to heat the energy storage material.

15. The apparatus according to claim 14, wherein the control module is further configured to: when the temperature of the energy storage material is higher than the second temperature threshold and lower than the first temperature threshold, control the second heat exchange unit to stop cooling the energy storage material.

16. A vehicle, comprising the heat management apparatus according to any one of claims 1 to 9, the control apparatus for a heat management apparatus according to any one of claims 13 to 15, and a battery pack.

17. The vehicle according to claim 16, wherein the battery pack comprises:
a compartment; and
a battery module, accommodated in the box and comprising one or more battery cells, wherein
the first heat exchange unit is accommodated in the compartment.
